# EUROPÄISCHE PATENTSCHRIFT

(11) **EP 2 836 468 B1**
(45) Veröffentlichungstag und Bekanntmachung des Hinweises auf die Patenterteilung: **30.03.2016**
(21) Anmeldenummer: 13717476.9
(22) Anmeldetag: 11.04.2013
(51) Int. Cl.: C02F 1/42, C02F 5/00

(54) **VERFAHREN ZUM BETRIEB EINER WASSERENTHÄRTUNGSANLAGE MIT VERSCHIEDENEN BETRIEBSMODI ZUR REGENERATIONSSTEUERUNG**
METHOD FOR OPERATING A SOFTENING DEVICE INCLUDING DIFFERENT OPERATING MODES FOR CONTROLLING REGENERATION
PROCÉDÉ DE FONCTIONNEMENT D'UN ADOUCISSEUR D'EAU COMPRENANT DE DIFFÉRENT MODES DE FONCTIONNEMENT POUR LE CONTRÔLE DE LA RÉGÉNÉRATION

(30) Priorität: 14.04.2012 DE 102012007589
(43) Veröffentlichungstag der Anmeldung: 18.02.2015
(73) Patentinhaber: Judo Wasseraufbereitung GmbH, 71364 Winnenden (DE)
(72) Erfinder: SÖCKNICK, Ralf, 70806 Kornwestheim (DE)
(74) Vertreter: Kohler Schmid Möbus Patentanwälte
(86) Internationale Anmeldenummer: PCT/EP2013/057560
(87) Internationale Veröffentlichungsnummer: WO 2013/153150

(56) Entgegenhaltungen:
- EP-A1- 2 228 129
- WO-A2-2011/080075
- DE-B3-102008 045 354
- DE-B4- 10 350 884
- US-A- 5 544 072

## Beschreibung

Die Erfindung betrifft ein Verfahren zum Betrieb einer Wasserenthärtungsanlage,
wobei die Wasserenthärtungsanlage umfasst
- einen oder mehrere Behälter mit lonentauscherharz;
- ein Vorratsgefäß für eine Regeneriermittellösung zum Regenerieren des lonentauscherharzes;
- eine Verschneideeinrichtung, mit der aus einem enthärteten Teilstrom und einem rohwasserführenden Teilstrom ein Verschnittwasserstrom gemischt werden kann,
- und eine elektronische Steuereinheit,
wobei die Steuereinheit eine Restkapazität eines jeden Behälters mitverfolgt und abhängig von der Restkapazität eines jeweiligen Behälters dessen Regeneration auslöst.

Ein solches Verfahren ist beispielsweise aus der DE 10 2007 059 058 B3 bekannt geworden.

Wasser, welches durch das öffentliche Trinkwassernetz zur Verfügung gestellt wird, ist mit verschiedenen Härtebildnern, insbesondere Ca²⁺-Ionen und Mg²⁺-Ionen, belastet. Dies kann zu Kalkablagerungen an dem Wasser ausgesetzten Oberflächen führen, insbesondere Rohrleitungen verstopfen oder Heizstäbe unbrauchbar machen, oder aus anderen Gründen unerwünscht sein.

Durch Ionentauscher kann Wasser auf einfache und kostengünstige Weise von Härtebildnern befreit werden. Dabei werden die Ca²⁺-Ionen und die Mg²⁺-Ionen typischerweise durch Na⁺-Ionen ausgetauscht. Während für manche Anwendungen vollenthärtetes Wasser (mit 0°dH, dH=deutscher Härte) benötigt wird, sind für andere Anwendungen bestimmte geringe Wasserhärten (beispielsweise von ca. 8°dH für die Trinkwasseraufbereitung oder auch für die Körperpflege) erwünscht. Für letztere Anwendungen kann (unbehandeltes) Rohwasser mit (im Wesentlichen vollständig enthärtetem) Weichwasser verschnitten werden, um eine bestimmte Wasserhärte einzustellen, vgl. die DE 10 2007 059 058 B3.

Ionentauscher können aber nur eine begrenzte Menge von Härtebildnern binden bzw. gegen Na⁺-Ionen tauschen, entsprechend der Menge der Bindungsstellen im lonentauscherharz. Durch die fortgesetzte Nutzung des Ionentauschers wird dessen Kapazität zunehmend erschöpft. Wenn an allen Bindungsstellen die Na⁺-Ionen gegen Härtebildner ausgetauscht wurden, ist der Ionentauscher vollständig erschöpft und muss regeneriert werden, um einen Härtedurchbruch zu vermeiden. Dazu wird der Ionentauscher mit einer konzentrierten Salzsole beaufschlagt, wodurch die gebundenen Härtebildner verdrängt und durch Na⁺-Ionen ersetzt werden. Nach der Regeneration steht wieder die volle Kapazität (auch Grundkapazität genannt) des Ionentauschers zur Verfügung.

Die EP 2 228 129 A1 stellt ein Verfahren zur Überwachung einer Wasserenthärtungsanlage vor, bei dem die Leitfähigkeit einer verbrauchten Regeneriermittellösung oder eines Spülwassers während einer Regeneration stetig gemessen wird, um den Fortschritt der Regeneration zu überwachen.

Zur Steuerung der Regeneration eines Ionentauschers einer Wasserenthärtungsanlage ist es bekannt, aus der Rohwasserhärte, der seit der letzten Regeneration enthärteten Wassermenge und einer in einer elektronischen Steuereinheit abgespeicherten Grundkapazität des Ionentauschers eine Restkapazität zu berechnen und eine Regeneration auszulösen, wenn die Restkapazität einen Grenzwert unterschreitet, vgl. beispielsweise die DE 32 33 238 C2 oder DE 103 50 884 B4. Ist die Wasserenthärtungsanlage mit einer Verschneideeinrichtung ausgestattet, ist es bekannt, mit einem Wasserzähler den durch den Ionentauscher geflossenen, vollenthärteten Teilstrom zu erfassen und für die Auslösung einer Regeneration heranzuziehen, vgl. die DE 10 2007 059 058 B3.

Während ein voll regenerierter oder noch nicht allzu stark erschöpfter Ionentauscher in der Regel praktisch alle Härtebildner eines durchströmenden Wassers binden kann, kann ein zu einem größeren Anteil erschöpfter Ionentauscher nur noch einen Teil der Härtebildner eines durchströmenden Wassers binden. Mit anderen Worten, das von einem zu einem größeren Anteil erschöpften Ionentauscher bereitgestellte Wasser weist eine gewisse Resthärte auf. Dieser Effekt wird auch als "Härteschlupf" bezeichnet.

Um einen Härteschlupf zuverlässig zu vermeiden, muss der Ionentauscher bereits zu einem Zeitpunkt regeneriert werden, an dem noch eine nicht unerhebliche Restkapazität des Ionentauschers zur Verfügung steht. Diese Restkapazität bleibt ungenutzt, was den durchschnittlichen Salzverbrauch für die Regeneration des Ionentauschers erhöht.

### Aufgabe der Erfindung

Es ist die Aufgabe der vorliegenden Erfindung, den Regenerationszeitpunkt und den Salzverbrauch einer Wasserenthärtungsanlage zu optimieren.

### Kurze Beschreibung der Erfindung

Diese Aufgabe wird auf überraschend einfache, aber wirkungsvolle Art in einem Verfahren der eingangs genannten Art dadurch gelöst,
dass in einem ersten Betriebsmodus der Steuereinheit die mitverfolgte Restkapazität eines jeweiligen Behälters mit einem diesem Behälter zugeordneten ersten Grenzwert GW1 verglichen wird, und eine Regeneration des jeweiligen Behälters nur dann ausgelöst werden kann, wenn die Restkapazität dieses Behälters kleiner ist als der diesem Behälter zugeordnete erste Grenzwert GW1,
dass in einem zweiten Betriebsmodus der Steuereinheit die mitverfolgte Restkapazität eines jeweiligen Behälters mit einem diesem Behälter zugeordneten zweiten Grenzwert GW2 verglichen wird, und eine Regeneration des jeweiligen Behälters dadurch ausgelöst wird, dass die Restkapazität dieses Behälters kleiner ist als der diesem Behälter zugeordnete zweite Grenzwert GW2,
wobei für einen jeweiligen Behälter der zugeordnete erste Grenzwert GW1 kleiner ist als der zugeordnete zweite Grenzwert GW2,
und dass die Wasserenthärtungsanlage im ersten Betriebsmodus Rohwasser gemischt mit enthärtetem Wasser bereitstellt, und im zweiten Betriebsmodus nur vollständig enthärtetes Wasser bereitstellt.

Die vorliegende Erfindung schlägt vor, den Regenerationszeitpunkt einer Wasserenthärtungsanlage flexibel zu gestalten, und an die aktuellen Erfordernisse der Verbraucher, die das von der Wasserenthärtungsanlage bereitgestellte Wasser beziehen, anzupassen. Dazu sind in der Steuereinheit zwei alternative Betriebsmodi vorgesehen.

Im ersten Betriebsmodus ist eine Regeneration eines Behälters mit lonentauscherharz nur dann gestattet, wenn die mitverfolgte Restkapazität einen ersten Grenzwert GW1 unterschreitet; in der Regel wird die Regeneration allein dadurch ausgelöst, dass die Restkapazität den ersten Grenzwert GW1 unterschreitet. Alternativ kann auch eine Regeneration dadurch ausgelöst werden, dass die Restkapazität den ersten Grenzwert GW1 unterschreitet und gleichzeitig mindestens eine weitere Bedingung erfüllt ist. Der erste Grenzwert GW1 ist typischerweise so niedrig gewählt, dass bereits kurz vor dessen Erreichen ein geringer Härteschlupf am Behälter auftreten kann, etwa bei Spitzendurchflüssen. Für viele Anwendungen, etwa im Bereich von Trinkwasserinstallationen, ist eine geringfügige Abweichung, insbesondere Erhöhung, der Härte des bereitgestellten Wassers von einem vorgegebenen Sollwert erlaubt und daher ein (nicht zu großer) Härteschlupf hinnehmbar. Für diese Anwendungen kann im ersten Betriebsmodus ein relativ großer Teil der Kapazität des Ionentauschers genutzt werden, und der Salzverbrauch wird durch weniger häufige Regenerationen pro bereitgestellter Wassermenge gesenkt.

Im zweiten Betriebsmodus wird eine Regeneration eines Behälters mit lonentauscherharz dadurch ausgelöst, dass die mitverfolgte Restkapazität einen zweiten Grenzwert GW2 unterschreitet. Der zweite Grenzwert GW2 ist typischerweise so hoch gewählt, dass bis zu dessen Erreichen kein Härteschlupf auftritt. Für besondere Anwendungen, etwa technische Anwendungen, ist eine Härteschwankung selbst in geringem Ausmaß nicht erlaubt; insbesondere sind für manche industrielle Produktionsprozesse auch geringe Resthärten im Weichwasser nicht erlaubt. Ein Härteschlupf ist dann nicht hinnehmbar. Für diese besonderen Anwendungen kann im zweiten Betriebsmodus zwar nur ein kleinerer Teil der Kapazität des Ionentauschers genutzt werden, was den Salzverbrauch durch häufigere Regenerationen pro bereitgestellter Wassermenge steigert, jedoch kann ein Härteschlupf ausgeschlossen werden.

Dadurch, dass für jeden Behälter der jeweils zugehörige zweite Grenzwert GW2 größer ist als der erste Grenzwert GW1, wird im zweiten Betriebsmodus ein besserer Schutz gegen Härteschlupf gewährleistet, und im ersten Betriebsmodus ein geringerer Salzverbrauch erreicht.

Erfindungsgemäß ist vorgesehen, dass die Wasserenthärtungsanlage im ersten Betriebsmodus Rohwasser gemischt mit enthärtetem Wasser bereitstellt, und im zweiten Betriebsmodus nur vollständig enthärtetes Wasser bereitstellt. Somit ist der Anforderung bzw. Bereitstellung von Verschnittwasser (teilenthärtetem Wasser mit einer Härte > 0°dH) der erste Betriebsmodus zugewiesen, mit welchem salzsparend ein größerer Teil der Kapazität des lonentauscherharzes eines jeweiligen Behälters ausgenutzt werden kann. Bei Anforderung von Verschnittwasser ist in vielen Anwendungssituationen eine gewisse Abweichung von einem Sollwert der Härte des Verschnittwassers erlaubt, was erfindungsgemäß ausgenutzt wird. Andererseits ist der Anforderung bzw. Bereitstellung von vollständig enthärtetem Wasser (Weichwasser von 0°dH, ohne Rohwasseranteil) der zweite Betriebsmodus zugeordnet, mit welchem eine genauere Einhaltung der Härtevorgabe im bereitgestellten Wasser gewährleistet ist. Bei Anforderung von vollständig enthärtetem Wasser kann in vielen Anwendungssituationen eine merkliche Resthärte sehr nachteilig sein, etwa Beschädigungen oder Versagen von technischen Anlagen provozieren, so dass der mit dem zweiten Betriebsmodus einhergehende, erhöhte Salzverbrauch gerechtfertigt ist. Die Erfindung ist besonders dazu geeignet, mit verschiedenen, insbesondere wechselnden Anwendungsfällen automatisch einen passenden Regenerationszyklus einzusetzen. Die Wasserenthärtungsanlage stellt das Wasser der gewünschten Qualität (des gewünschten Härtegrads) über die Verschneideeinrichtung, typischerweise mittels einer entsprechenden Stellung eines Verschneideventils, bereit. Das von der Wasserenthärtungsanlage bereitgestellte Wasser wird typischerweise stets am selben Wasserablauf der Wasserenthärtungsanlage entnommen, unabhängig von der gewünschten Qualität des Wassers.

Mit dem erfindungsgemäßen Betriebsverfahren kann eine Wasserenthärtungsanlage universell in verschiedenen Bereichen eingesetzt werden, und dabei - wenn nötig - sehr strengen Anforderungen an die Zuverlässigkeit der Enthärtung genügen, oder alternativ den Salzverbrauch senken, um Kosten, Nachfüllaufwand und Umweltbelastung zu reduzieren. Die beiden Betriebsmodi sind in der Steuereinheit eingerichtet, so dass zwischen diesen bei Bedarf, gegebenenfalls auch automatisch, umgeschaltet werden kann. Dasselbe Betriebsverfahren - bzw. dieselbe Steuereinheit - kann für verschiedene Anwendungsfälle, und auch zeitlich wechselnde Anwendungsfälle, eingesetzt werden.

Falls die Wasserenthärtungsanlage nur einen Behälter mit lonentauscherharz aufweist, ist bevorzugt ein Absperrventil vorgesehen, mit dem verhindert werden kann, dass Rohwasser oder nicht ausreichend enthärtetes Wasser in eine nachfolgende Wasserinstallation gelangt, wenn der Behälter gerade regeneriert wird. Bevorzugt sind jedoch mehrere Behälter vorgesehen, so dass während der Regeneration eines Behälters wenigstens ein anderer, nicht erschöpfter Behälter für eine unterbrechungsfreie Wasserenthärtung zur Verfügung steht.

Sind mehrere Behälter vorgesehen, so können diese baugleich sein; in diesem Fall sind den baugleichen Behältern typischerweise gleiche erste Grenzwerte GW1 und gleiche zweite Grenzwerte GW2 zugeordnet. Nicht baugleichen Behältern sind typischerweise verschiedene erste Grenzwerte GW1 und verschiedene zweite Grenzwerte GW2 zugeordnet. Eine Restkapazität, die mit einem Grenzwert GW1, GW2 verglichen wird, ist eine durch das lonentauscherharz noch aufnehmbare Stoffmenge an Härtebildnern; oftmals wird die Restkapazität auf Grundlage der momentanen Rohwasserhärte in eine noch enthärtbare Rohwassermenge umgerechnet. Es ist auch möglich, die Restkapazität - und entsprechend auch die Grenzwerte GW1, GW2 - als Anteil von der Grundkapazität (maximale Kapazität unmittelbar nach einer Regeneration) des lonentauscherharzes eines Behälters anzugeben.

Ein Behälter kann mehrere Teilbehälter (etwa parallele Säulen) mit lonentauscherharz umfassen, die einheitlich betrieben werden (also stets gemeinsam zur Enthärtung eingesetzt werden und stets gemeinsam regeneriert werden).

Man beachte, dass die Steuereinheit in der Regel auch die Verschneideeinrichtung automatisiert steuert (etwa über einen Stellmotor an einem Verschneideventil), so dass die Wasserenthärtungsanlage bzw. die Verschneideeinrichtung Wasser einer gewünschten Qualität (einer gewünschten Härte) bereitstellt.

### Bevorzugte Varianten des erfindungsgemäßen Verfahrens

Bei einer vorteilhaften Variante des erfindungsgemäßen Verfahrens wird der Betriebsmodus der Steuereinheit durch die Stellung eines Verschneideventils der Verschneideeinrichtung bestimmt, wobei einer geöffneten oder teilgeöffneten Stellung des Verschneideventils, in der die Verschneideeinrichtung Rohwasser gemischt mit enthärtetem Wasser bereitstellt, der erste Betriebsmodus zugeordnet ist, und einer geschlossenen Stellung des Verschneideventils, in der die Verschneideeinrichtung nur vollständig enthärtetes Wasser bereitstellt, der zweite Betriebsmodus zugeordnet ist. In diesem Fall kann auch bei manueller Betätigung des Verschneideventils der Betriebsmodus korrekt ermittelt werden. Am Verschneideventil ist hierbei typischerweise ein Sensor, der die Stellung des Verschneideventils ermittelt, angeordnet. Die Steuereinheit kann dann der Stellung des Verschneideventils automatisch den zutreffenden Betriebsmodus zuordnen. Das Verschneideventil öffnet und schließt eine rohwasserführende Bypassleitung, deren Teilstrom dem enthärteten Teilstrom zugemischt wird.

Eine andere vorteilhafte Variante sieht vor, dass der Betriebsmodus der Steuereinheit von der Steuereinheit aus einem ausgewählten Härtegrad des von der Wasserenthärtungsanlage bereitzustellenden Wassers automatisch ermittelt wird,
insbesondere wobei der ausgewählte Härtegrad an der Steuereinheit direkt eingegeben wird. In diesem Fall braucht vom Anwender nur der gewünschte Härtegrad (die geforderte Produktwasserqualität) des bereitgestellten Wassers ausgewählt werden (meist mit einer manuellen Eingabe an der Steuereinheit), was besonders einfach ist. Bei einem ausgewählten Härtegrad von 0°dH (entsprechend einer Anforderung von vollständig enthärtetem Wasser, ohne Rohwasseranteil) ordnet die Steuereinheit automatisch den zweiten Betriebsmodus zu, und bei einem ausgewählten Härtegrad größer 0°dH (entsprechend einer Anforderung von teilenthärtetem Wasser, also einem Gemisch von enthärtetem Wasser und Rohwasser) ordnet die Steuereinheit automatisch den ersten Betriebsmodus zu. Die Steuereinheit steuert hier auch die Verschneideeinrichtung, so dass diese (Verschnitt-)Wasser der gewünschten Qualität bereitstellt.

Bei einer anderen Variante des erfindungsgemäßen Verfahrens wird der Betriebsmodus der Steuereinheit an der Steuereinheit direkt gewählt. In diesem Fall kann unabhängig von einem ausgewählten Härtegrad ein salzsparender Betrieb oder ein Betrieb mit verbesserter Sicherheit gegen Härteschlupf ausgewählt werden. Typischerweise sind an der Steuereinheit Wahltasten oder ein Umschalter für eine manuelle Vorgabe des Betriebsmodus vorgesehen.

Bevorzugt ist weiterhin eine Variante, die vorsieht, dass im ersten Betriebsmodus eine Regeneration eines jeweiligen Behälters dadurch ausgelöst wird, dass die Restkapazität dieses Behälters den ersten Grenzwert GW1 unterschreitet und gleichzeitig eine Resthärte des vom lonentauscherharz dieses Behälters enthärteten Wassers oder eine Resthärte eines von der Wasserenthärtungsanlage insgesamt enthärteten Wassers einen Schwellwert SWW überschreitet. Durch diese Variante kann das Ausmaß des Härteschlupfs im ersten Betriebsmodus begrenzt werden. Allerdings ist eine Überwachung der Resthärte des enthärteten Wassers (entweder des jeweiligen Behälters, oder der Wasserenthärtungsanlage insgesamt) erforderlich; die Resthärte von enthärtetem Wasser kann beispielsweise mit einer ionenselektiven Elektrode bestimmt werden. In Hausinstallationen wird kein vollständig enthärtetes Trinkwasser benötigt, und eine geringe Abweichung einer Verschnittwasserhärte von einem Sollwert ist dann meist tolerierbar. Ein geringer Anstieg der Resthärte im Weichwasser kann gegebenenfalls auch über die Stellung des Verschneideventils korrigiert werden.

Bei einer bevorzugten Weiterentwicklung dieser Variante beträgt der Schwellwert SWW nicht mehr als 15% der Härte des Rohwassers, insbesondere wobei der Schwellwert SWW 10% der Härte des Rohwassers beträgt. Ein Schwellwert SWW, der in Relation zur Rohwasserhärte festgelegt ist, kann das Ausmaß des Härteschlupfs bei verschiedenen Rohwasserhärten angemessen begrenzen. Mit dieser Weiterentwicklung kann auch die Einhaltung der DIN EN 14743, trotz der Anwendung des ersten Betriebsmodus, noch sichergestellt werden. Beispielsweise darf bei einer Rohwasserhärte von 20°dH die Resthärte des behandelten Wassers - Wasser, das die Behälter mit Ionenaustauscherharz durchströmt hat - maximal 2°dH betragen, entsprechend einem Schwellwert SWW von 10%.

Vorteilhaft ist weiterhin eine Verfahrensvariante, bei der im ersten Betriebsmodus eine Regeneration eines jeweiligen Behälters dadurch ausgelöst wird, dass die Restkapazität dieses Behälters den ersten Grenzwert GW1 um mehr als einen Toleranzwert TOW unterschreitet. Diese Variante ermöglicht die Nutzung des Kapazitätsbereichs eines Behälters zwischen GW1 und GW1-TOL, um den Salzverbrauch weiter zu senken; die Nutzung dieses Kapazitätsbereichs wird dabei typischerweise durch einen zusätzlichen möglichen Auslöser für eine Regeneration beschnitten, um das Ausmaß eines möglichen Härteschlupfs zu begrenzen. Wird diese Variante beispielsweise mit der vorhergehenden Variante kombiniert, so wird bei einer Restkapazität des Behälters in einem Intervall zwischen GW1 und GW1-TOW eine Regeneration ausgelöst, wenn der Schwellwert SWW überschritten wird. Unabhängig vom Schwellwert SWW wird die Regeneration stets ausgelöst, wenn die Restkapazität den Wert GW1-TOW unterschreitet. Es ist auch möglich, eine andere Auslösebedingung im besagten Intervall als eine Überschreitung des Schwellwerts SWW der Resthärte einzurichten, etwa eine Überschreitung eines maximalen Volumenstroms durch den Behälter oder durch die Wasserenthärtungsanlage.

Vorteilhaft ist eine Weiterentwicklung dieser Variante, wobei der Toleranzwert TOW nicht mehr als 15% des ersten Grenzwerts GW1 beträgt, insbesondere wobei der Toleranzwert TOW 10% des ersten Grenzwerts GW1 beträgt. Ein Toleranzwert TOW, der in Relation zum ersten Grenzwert GW1 festgelegt ist, kann das Ausmaß des Härteschlupfs bei verschiedenen ersten Grenzwerten GW1 angemessen begrenzen.

Bei einer alternativen, vorteilhaften Verfahrensvariante ist vorgesehen, dass im ersten Betriebsmodus eine Regeneration eines jeweiligen Behälters allein dadurch ausgelöst wird, dass die Restkapazität dieses Behälters den ersten Grenzwert GW1 unterschreitet. Dies ist in der Praxis besonders einfach.

Besonders bevorzugt ist eine Variante des erfindungsgemäßen Verfahrens, bei der die Menge der bei einer Regeneration eines jeweiligen Behälters verwendeten Regeneriermittellösung der tatsächlich verbliebenen Restkapazität dieses Behälters angepasst wird. Bei höherer Restkapazität genügt eine kleinere Salzmenge als bei einer kleineren Restkapazität, daher kann durch die Anpassung der Salzmenge an die Restkapazität, die für einen Behälter je nach Betriebsmodus (und möglicherweise auch bei unverändertem Betriebsmodus von Regeneration zu Regeneration) variiert, Salz gespart werden. Diese Variante verbessert somit die Salzausnutzung. Die Regeneriermittellösung kann beispielsweise mittels einer Dosierpumpe vom Vorratsgefäß zum Ionenaustauscherharz transportiert werden. Je nach Erschöpfungsgrad kann die Pumpe mehr oder weniger Regeneriermittellösung fördern.

Bei einer vorteilhaften Ausführungsform ist vorgesehen, dass die Grenzwerte GW1 und GW2 abhängig sind vom aktuellen oder erwarteten Volumenstrom des von der Wasserenthärtungsanlage bereitgestellten Wassers, insbesondere wobei die Grenzwerte GW1 und GW2 bei geringerem aktuellen oder erwarteten Volumenstrom höher sind. In dieser Variante werden Regenerationen bevorzugt zu Zeiten durchgeführt, in denen wenig Weichwasser (ggf. als Anteil in einem Verschnittwasser) benötigt wird, beispielsweise nachts. Behälter, die gerade regeneriert werden, können nicht zur Enthärtung eingesetzt werden. Die Variante vermeidet damit Engpässe in der zur Verfügung stehenden Enthärtungsleistung der Wasserenthärtungsanlage. Zeiten mit geringeren Entnahmen können in der elektronischen Steuereinheit einprogrammiert werden oder mittels einer "intelligenten" Elektronik mit Zeit- und Durchflusserfassung selbständig erkannt und festgelegt (definiert) werden.

Bevorzugt ist auch eine Variante, bei der die Restkapazität eines jeweiligen Behälters aus der bereits mit diesem Behälter enthärteten Wassermenge, der Rohwasserhärte und einer in der Steuereinheit abgespeicherten Grundkapazität des lonentauscherharzes dieses Behälters abgeleitet wird. Die Restkapazität (noch verbleibende Kapazität seit der letzten Regeneration) kann auf diese Weise zuverlässig mitverfolgt werden. Die Steuereinheit berücksichtigt bevorzugt auch eine zwischen zwei Regenerationen veränderliche Rohwasserhärte, d.h. die Wasserentnahmen werden mit der momentanen Rohwasserhärte gewichtet, um die Restkapazität mit hoher Genauigkeit mitverfolgen zu können. Mit anderen Worten werden dann die bereits mit dem Behälter enthärteten Wassermengen mit der jeweiligen Rohwasserhärte zum Zeitpunkt ihrer jeweiligen Enthärtung gewichtet.

In den Rahmen der vorliegenden Erfindung fällt auch eine Wasserenthärtungsanlage, umfassend
- einen oder mehrere Behälter mit lonentauscherharz;
- ein Vorratsgefäß für eine Regeneriermittellösung zum Regenerieren des lonentauscherharzes;
- eine Verschneideeinrichtung, mit der aus einem enthärteten Teilstrom und einem rohwasserführenden Teilstrom ein Verschnittwasserstrom gemischt werden kann,
- und eine elektronische Steuereinheit,
wobei die Steuereinheit dazu ausgebildet ist, eine Restkapazität eines jeden Behälters mitzuverfolgen und abhängig von der Restkapazität eines jeweiligen Behälters dessen Regeneration auszulösen,
die dadurch gekennzeichnet ist,
dass die Steuereinheit dazu ausgebildet ist,
dass in einem ersten Betriebsmodus der Steuereinheit die mitverfolgte Restkapazität eines jeweiligen Behälters mit einem diesem Behälter zugeordneten ersten Grenzwert GW1 verglichen wird, und eine Regeneration des jeweiligen Behälters nur dann ausgelöst werden kann, wenn die Restkapazität dieses Behälters kleiner ist als der diesem Behälter zugeordneter erster Grenzwert GW1,
und dass in einem zweiten Betriebsmodus der Steuereinheit die mitverfolgte Restkapazität eines jeweiligen Behälters mit einem diesem Behälter zugeordneten zweiten Grenzwert GW2 verglichen wird, und eine Regeneration des jeweiligen Behälters dadurch ausgelöst wird, dass die Restkapazität dieses Behälters kleiner ist als der diesem Behälter zugeordnete zweite Grenzwert GW2,
wobei für einen jeweiligen Behälter der zugeordnete erste Grenzwert GW1 kleiner ist als der zugeordnete zweite Grenzwert GW2,
und wobei die Wasserenthärtungsanlage im ersten Betriebsmodus Rohwasser gemischt mit enthärtetem Wasser bereitstellt, und im zweiten Betriebsmodus nur vollständig enthärtetes Wasser bereitstellt. Die erfindungsgemäße Wasserenthärtungsanlage ist ausgebildet zur Durchführung eines oben angegebenen, erfindungsgemäßen Verfahrens oder einer seiner Varianten. Mit ihr kann der Salzverbrauch und der Regenerierzeitpunkt optimiert werden. Die Wasserenthärtungsanlage kann universell für verschiedene Anwendungsbereiche eingesetzt werden, wobei über die beiden Betriebsmodi eine (gegebenenfalls automatische) Anpassung an die Erfordernisse der Anwendungsbereiche erfolgen kann. Die für die beiden Betriebsmodi und gegebenenfalls deren automatischer Umschaltung erforderlichen Parameter, insbesondere die Grenzwerte GW1 und GW2 (oder eine Funktionalität, mit der GW1 und/oder GW2 ermittelt werden kann) für jeden Behälter, sind in einem elektronischen Speicher der Steuereinheit hinterlegt.

Bevorzugt ist eine Ausführungsform der erfindungsgemäßen Wasseraufbereitungsanlage, die vorsieht, dass jeder Behälter aufweist
- einen Durchflussmesser zur Bestimmung eines durch den Behälter fließenden Wasserstroms,
- Ventile zur Steuerung a) des Zulaufs von Rohwasser, b) des Ablaufs von enthärtetem Wasser, c) des Zulaufs von Regeneriermittellösung und d) des Ablaufs von verbrauchter Regeneriermittellösung und Spülwasser,
- sowie mindestens einen Stellmotor oder eine Hydraulik zur Betätigung der Ventile. Dadurch kann jeder Behälter unabhängig von den übrigen Behältern betrieben werden. Diese Ausführungsform eröffnet eine hohe Flexibilität und ermöglicht einen modularer Aufbau (ggf. auch eine einfache nachträgliche Erweiterung) der Wasserenthärtungsanlage. Ein kurzfristiges Reagieren auf die jeweilige Anwendungssituation wird ermöglicht.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig.1: ein Ablaufdiagramm einer ersten Variante des erfindungsgemäßen Verfahrens, mit Bestimmung des Betriebsmodus über das Verschneideventil;
- Fig. 2: ein Ablaufdiagramm einer zweiten Variante des erfindungsgemäßen Verfahrens, mit Bestimmung des Betriebsmodus über die Eingabe einer Produktwasserqualität;
- Fig. 3a: eine schematische Aufsicht auf eine Ausführungsform einer erfindungsgemäßen Wasserenthärtungsanlage;
- Fig. 3b: eine schematische Schrägansicht der Wasserenthärtungsanlage von Fig. 3a.

### Überblick über die Erfindung

Mit der vorliegenden Erfindung wird eine Wasserenthärtungsanlage bzw. ein Betriebsverfahren für eine Wasserenthärtungsanlage vorgestellt, mit der die Auslösung der Regeneration eines Behälters für lonentauscherharz flexibel gesteuert werden kann, etwa abhängig vom Verwendungszweck des von der Wasserenthärtungsanlage bzw. ihrer Verschneideeinrichtung bereitgestellten enthärteten oder teilenthärteten Wassers oder abhängig vom gewünschten Härtegrad.

Wird nur teilenthärtetes Wasser benötigt, so ist ein geringfügiger Härtedurchbruch in aller Regel tolerierbar. Die Regeneration kann dann später gestartet werden. Die Wirksamkeit der Besalzung bei einer anschließenden Regeneration ist entsprechend höher. Für diesen Verwendungszweck ist der erste Betriebsmodus gut geeignet.

Wird vollenthärtetes Wasser für technische Anwendungen im Dauerbetrieb benötigt, so ist ein Härteanstieg bzw. Härteschlupf unter allen Umständen zu vermeiden. Entsprechend muss frühzeitig regeneriert werden, die Regeneration darf auf keinen Fall zeitlich verzögert werden. Für diesen Verwendungszweck ist der zweite Betriebsmodus gut geeignet.

Die erfindungsgemäße Wasserenthärtungsanlage bzw. deren erfindungsgemäßes Betriebsverfahren ist universell in verschiedenen Bereichen einsetzbar:
a) im Bereich von Trinkwasserinstallationen, wo ein Mindestgehalt an Calcium durchaus erwünscht ist und gemäß DIN 19636-100 sowie DIN EN 12502-3 aus korrosionstechnischen Gründen gefordert wird. Spitzendurchfiüsse finden nur zu bestimmten Zeiten, beispielsweise morgens und abends, statt. Eine geringfügige Abweichung des aufbereiteten Wassers vom Sollwert ist erlaubt.
b) im Bereich technischer Anwendungen, wo vollständig enthärtetes Wasser bei hohen Dauerdurchfiüssen gefordert wird. Härtedurchbrüche sind selbst in geringem Ausmaß nicht erlaubt. Bsp.: Wasserenthärtungsanlagen, die zur Speisung für Umkehrosmoseanlagen eingesetzt werden, Weichwasser für industrielle Produktionsprozesse.

Für beide Bereiche gelten ganz unterschiedliche Anforderungen. Die Wasserenthärtungsanlage kann sich automatisch dem jeweiligen Einsatzzweck anpassen und optimiert entsprechend ihre Betriebsparameter durch geeignete Auswahl des Betriebsmodus.

Der Wahl des Betriebsmodus kann automatisch über die Einstellung des Verschneideventils erfolgen, etwa je nachdem, ob das Verschneideventil geschlossen oder (teilweise) geöffnet ist. Es ist aber auch möglich, den Betriebsmodus durch eine manuelle Eingabe, beispielsweise mittels einer Tastatur, festzulegen. Dies kann z.B. wahlweise "technische Anwendung (0°dH)" oder "teilenthärtetes Trinkwasser" sein. Denkbar ist auch, die Verschnittwasserhärte (beispielsweise per Tastatur) vorzugegeben, und aus dieser den Betriebsmodus automatisch abzuleiten. Eine weitere Alternative zeichnet sich dadurch aus, dass der Anwendungszweck über einen Wahlschalter vorgegeben wird, die Anlage wählt die entsprechenden Anlagenparameter einschließlich des Betriebsmodus dann automatisch.

### Erste Variante des erfindungsgemäßen Verfahrens

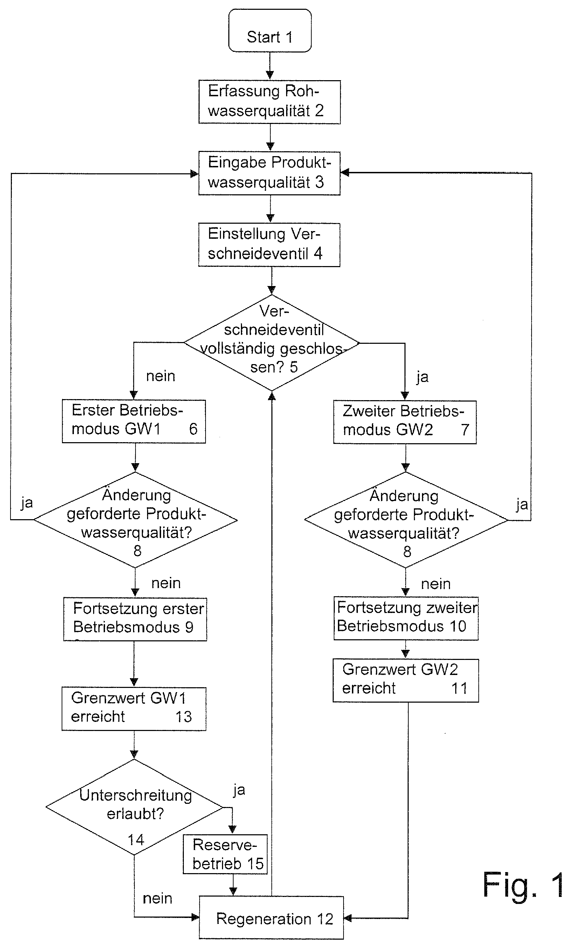

Eine erste beispielhafte Variante eines erfindungsgemäßen Betriebsverfahrens ist in der **Figur 1** dargestellt.

Zu Beginn ("Start" 1) des Betriebes des Wasserenthärtungsanlage wird zunächst die Rohwasserhärte erfasst ("Erfassung Rohwasserqualität" 2). Dies geschieht vorteilhaft automatisch und wiederholt mittels eines integrierten Leitfähigkeitssensors. Die Rohwasserhärte kann auch vorab titrimetrisch bestimmt oder beim Wasserversorger erfragt werden. Bei letzteren Methoden ist jedoch zu bedenken, dass Schwankungen in der Rohwasserqualität während des Betriebs nicht automatisch registriert und berücksichtigt werden.

Es erfolgt eine Eingabe der geforderten Produktwasserqualität (Härte des bereitgestellten Wassers) über eine Eingabevorrichtung (Tastatur, Schalter o.ä.) ("Eingabe der Produktwasserqualität" 3). Je nach Anwendung werden unterschiedliche Produktwasserqualitäten gefordert. So kann es in der Trinkwasserinstallation aus Korrosionsschutzgründen durchaus erwünscht sein, ein Verschnittwasser mit einer Resthärte von etwa 6°dH zu verwenden, während für gewisse technische Anwendungen vollständig enthärtetes Wasser (0°dH) benötigt wird. Eine elektronische Steuereinheit steuert die Position eines Verschneideventils anhand der vorhandenen Rohwasserqualität und der gewünschten Produktwasserqualität ("Einstellung Verschneideventil" 4).

In der illustrierten Variante wird nun die Stellung des Verschneideventils überprüft, etwa mittels eines Sensors ("Verschneideventil vollständig geschlossen?" 5). Ist das Verschneideventil nicht vollständig geschlossen, d.h. das Produktwasser weist eine gewollte Härte auf wie es etwa in Trinkwasserinstallationen gefordert wird, so geht die Wasserenthärtungsanlage in einen ersten Betriebsmodus ("erster Betriebsmodus GW1" 6).

In diesem ersten Betriebsmodus ist ein Regeneriervorgang der Wasserenthärtungsanlage nur dann ausgelösbar, wenn die Restkapazität des für den Enthärtungsprozess verwendeten Ionenaustauscherharzes in einem Behälter einen diesem Behälter zugeordneten Grenzwert GW1 unterschreitet.

Ist das Verschneideventil dagegen vollständig geschlossen ("Verschneideventil vollständig geschlossen?" 5), d.h. es wird vollständig enthärtetes Produktwasser gefordert (z.B. bei industriellen Prozessen), so wird ein zweiter Betriebsmodus gewählt ("zweiter Betriebsmodus GW2" 7). Der zugehörige Grenzwert GW2 ist größer als der Grenzwert GW1.

Das bedeutet, dass im zweiten Betriebsmodus der Regeneriervorgang des Behälters früher ausgelöst wird, so dass ein Härteschlupf ("Härtedurchbruch") auf alle Fälle vermieden wird, wenn vollenthärtetes Wasser benötigt wird. Dagegen ist im ersten Betriebsmodus ein (geringer) Härteschlupf akzeptabel, weil kein vollständig enthärtetes Wasser benötigt wird und ein geringer Härteschlupf im Weichwasserbereich über die Steuerung des Verschneideventils ausgeglichen werden kann. Der erste Betriebsmodus arbeitet salzoptimiert, während der zweite Betriebsmodus selbst einen geringen Härteschlupf unter allen Umständen vermeidet.

In beiden Betriebsmodi ist jederzeit eine Änderung der geforderten Produktwasserqualität möglich ("Änderung geforderte Produktwasserqualität?" 8). Ist dies der Fall, so wird die neu gewünschte Produktwasserqualität eingegeben ("Eingabe Produktwasserqualität" 3) und der oben beschriebene Prozess wiederholt sich entsprechend.

Ändert sich die gewünschte Produktwasserqualität nicht, so wird der Betrieb der Wasserenthärtungsanlage im bisherigen ersten Betriebsmodus ("Fortsetzung erster Betriebsmodus" 9) oder zweiten Betriebsmodus 2 ("Fortsetzung zweiter Betriebsmodus" 10) fortgesetzt.
Wird im zweiten Betriebsmodus der Grenzwert GW2 erreicht ("Grenzwert GW2 erreicht" 11), so wird zwingend eine Regeneration durchgeführt ("Regeneration" 12), da ein Härteschlupf auf alle vermieden werden muss.

Bei Erreichen des Grenzwertes GW1 im ersten Betriebsmodus ("Grenzwert GW1 erreicht" 13) wird geprüft, ob eine Unterschreitung des Grenzwertes GW1 erlaubt ist ("Unterschreitung erlaubt?" 14). Die kann beispielsweise der Fall sein, wenn kleine Schwankungen der Resthärte im Produktwasser unproblematisch sind. So wird in Trinkwasserinstallationen üblicherweise Wasser mit einer Verschnittwasserhärte von etwa 6°dH bevorzugt. Ein kurzfristiger leichter Anstieg auf etwa 8°dH ist durchaus akzeptabel. Der Behälter kann dann noch eine gewisse Wassermenge enthärten ("Reservebetrieb" 15) bevor eine Regeneration ("Regeneration" 12) gestartet wird. Dadurch wird die Salzausbeute optimiert. Eine typische Bedingung für den Reservebetrieb ist beispielsweise, dass die Resthärte des (voll-)enthärteten Wassers (die beispielsweise mit einer ionenselektiven Elektrode vor der Verschneidung mit Rohwasser ermittelt wird) einen Schwellwert SWW noch nicht überschreitet. Dann ist auch sichergestellt, dass die Verschnittwasserhärte nur begrenzt angestiegen ist.

Ist dagegen eine Unterschreitung des Grenzwertes GW1 nicht erlaubt, etwa weil bei dessen Unterschreitung eine zu große Abweichung der Verschnittwasserhärte vom Sollwert befürchtet wird, so wird bei Erreichen des Grenzwertes GW1 ("Grenzwert GW1 erreicht" 13) sofort eine Regeneration ausgelöst ("Regeneration" 12).

Nach der Regeneration ("Regeneration" 12) wiederholt sich der oben beschriebene Vorgang, hier beginnend mit einer Überprüfung des Betriebsmodus.

Falls die betriebene Wasserenthärtungsanlage mehrere Behälter mit lonentauscherharz umfasst, die zu unterschiedlichen Zeitpunkten regeneriert werden können, wird die Regeneration für jeden Behälter gemäß dem obigen Ablauf gesondert gesteuert, d.h. für jeden einzelnen Behälter wird dessen Restkapazität mitverfolgt und mit den für diesen Behälter geltenden Grenzwerten GW1, GW2 (je nach Betriebsmodus) verglichen und gegebenenfalls dessen Regeneration veranlasst. Man beachte, dass der gewählte Betriebsmodus der Wasserenthärtungsanlage stets für alle Behälter gilt.

Ein typischer erster Grenzwert GW1 liegt im Bereich 5-15% der Grundkapazität eines Behälters, und ein typischer zweiter Grenzwert GW2 liegt im Bereich 20-40% der Grundkapazität eines Behälters.

### Zweite Variante des erfindungsgemäßen Verfahrens

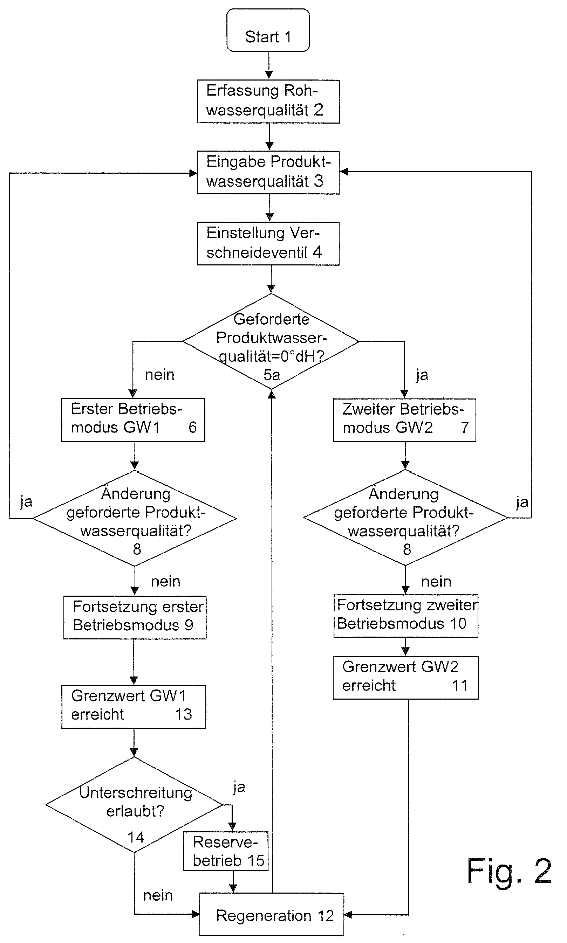

Eine zweite beispielshafte Variante des erfindungsgemäßen Verfahrens, die in **Figur 2** dargestellt ist, entspricht in weiten Teilen der ersten Variante, so dass hier nur die Unterschiede vorgestellt werden sollen.

Nach der Postitionierung des Verschneideventils ("Einstellung Verschneideventil 4") wird hier in der Steuereinheit der Wasserenthärtungsanlage geprüft, ob die eingegebene, geforderte Produktqualität auf eine Wasserhärte von 0°dH lautet ("Geforderte Produktwasserqualität = 0°dH?" 5a). Falls ja, geht die Wasserenthärtungsanlage bzw. deren Steuereinheit automatisch in den zweiten Betriebsmodus ("zweiter Betriebsmodus GW2" 7). Falls nein, geht die Wasserenthärtungsanlage bzw. deren Steuereinheit automatisch in den ersten Betriebsmodus ("erster Betriebsmodus GW1" 6). Eine Auswertung der Verschneideventilstellung mit einem Sensor erfolgt hier nicht, wodurch das Verfahren vereinfacht wird. Allerdings kann in diesem Fall eine manuelle Einstellung des Verschneideventils (etwa wenn eine automatische Einstellung des Verschneideventils durch einen manuellen Eingriff in den Betriebsablauf überstimmt worden ist) nicht erkannt werden und für die Auswahl des Betriebsmodus nicht ausgewertet werden.

### Ausführungsform der erfindungsgemäßen Wasserenthärtungsanlage

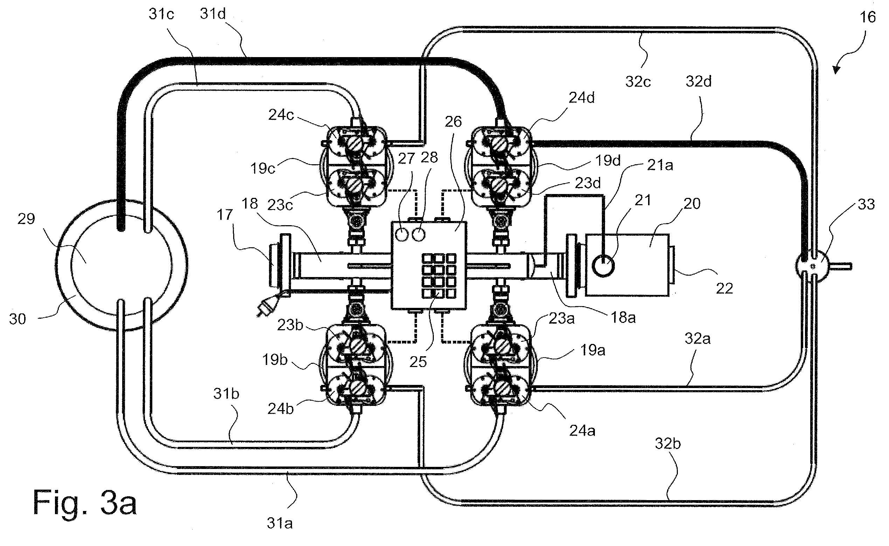

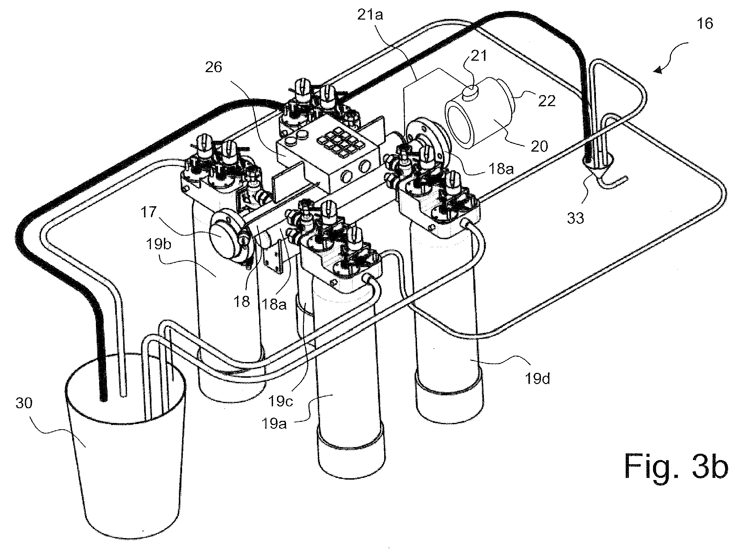

In **Figur 3a** in schematischer Aufsicht und in **Figur 3b** in einer schematischen Perspektivansicht ist eine beispielshafte Ausführungsform einer erfindungsgemäßen Wasserenthärtungsanlage 16 zur Durchführung des erfindungsgemäßen Verfahrens dargestellt.

Die Wasserenthärtungsanlage 16 ist über einen Zulauf 17 an ein lokales Wasserversorgungssystem, etwa das Trinkwassernetz, angeschlossen. Der am Zulauf 17 fließende Rohwasserstrom wird über ein Verteilersystem 18 aufgeteilt. Vier mit Ionenaustauscherharz gefüllten Behälter 19a, 19b, 19c, 19d werden dabei parallel durchströmt (soweit sie nicht gerade in Regeneration sind, wie hier Behälter 19d), wodurch das Rohwasser enthärtet wird. Das in den Behältern 19a, 19b, 19c, 19d enthärtete Wasser (Weichwasser) wird über ein Vereinigersystem 18a gesammelt. Es sei angemerkt, dass die Erfindung nicht auf eine Wasserenthärtungsanlage mit vier Behältern beschränkt ist. Ein Teil des Rohwassers kann auch über einen Bypass 21 a aus dem Verteilersystem 18 ohne Enthärtung abgezweigt werden.

In einer Verschneideeinrichtung 20 kann enthärtetes Wasser aus dem Vereinigersystem 18a über ein Verschneideventil 21 mit Rohwasser aus dem Verteiler 18, das über den Bypass 21a zum Verschneideventil 21 geführt ist, vermischt werden, so dass je nach Position des Verschneideventils 21 voll- oder teilenthärtetes Wasser an einem Ablauf 22 der Wasserenthärtungsanlage 16 austritt. Der Ablauf 22 kann beispielsweise an eine nachfolgende Trinkwasserinstallation oder aber an ein technisches Gerät angeschlossen sein. Man beachte, dass in Fig. 3b die Verschneideeinrichtung 20 etwas abgerückt vom Vereinigersystem 18a dargestellt ist, um letzteres besser kenntlich zu machen; tatsächlich führt das Vereinigersystem 18a direkt in die Verschneideeinrichtung 20, wie in Fig. 3a dargestellt.

Jeder Behälter 19a, 19b, 19c, 19d besitzt zwei Hauptventile 23a, 23b, 23c, 23d sowie zwei Regenerationsventile 24a, 24,b, 24c, 24d zur Steuerung des Wasserstroms im Normalbetrieb sowie des Regeneriermittelstroms während der Regeneration des jeweiligen Behälters.

Eine geforderte Produktwasserqualität wird über eine Tastatur 25 in eine elektronische Steuereinheit 26 eingegeben. Es kann vollständig enthärtetes Wasser (0°dH) für eine technische Anwendung gewählt werden, oder es wird eine bestimmte Verschnitthärte eingegeben, etwa 4-8°dH für eine Trinkwasserinstallation. Alternativ kann eine Eingabe über die Schalter 27, 28 erfolgen. Schalter 27 wird beispielsweise für Verschnittwasser mit einer definierten Verschnittwasserhärte betätigt (erster Betriebsmodus), während für vollständig enthärtetes Wasser Schalter 28 betätigt wird (zweiter Betriebsmodus). Die elektronische Steuereinheit 26 steuert die Position des Verschneideventils 21 anhand der vorhandenen Rohwasserqualität, die beispielsweise mittels eines nicht dargestellten Leitfähigkeitssensors automatisch ermittelt wird, und der gewünschten Produktwasserqualität.

Die Behälter 19a, 19b, 19c, 19d müssen regeneriert werden, wenn deren jeweilige Restkapazität einen Grenzwert unterschreitet. Erfindungsgemäß wird für jeden Behälter 19a, 19b, 19c, 19d ein erster Grenzwert GW1 festgelegt, wenn die Wasserenthärtungsanlage 16 im ersten Betriebsmodus arbeitet (teilenthärtetes Produktwasser gewählt), während im zweiten Betriebsmodus (vollständig enthärtetes Produktwasser gewählt) ein größerer Grenzwert GW2 als Kriterium für einen Regenerationsbeginn herangezogen wird; da die Behälter hier gleichartig sind, können ohne weiteres gleiche Grenzwerte für die verschiedenen Behälter herangezogen werden. Im zweiten Betriebsmodus wird folglich die Regeneration der Harzbehälter 19a, 19b, 19c, 19d früher gestartet, weil die Vermeidung eines Härtedurchbruches oberste Priorität besitzt. Im ersten Betriebsmodus können dagegen kleine Schwankungen der Resthärte im Produktwasser eher toleriert werden und gegebenenfalls auch durch die Verschneideeinrichtung 20 ausgeglichen werden. So wird in Trinkwasserinstallationen üblicherweise Wasser mit einer Härte von etwa 6°dH bevorzugt. Ein kurzfristiger leichter Anstieg auf etwa 8°dH ist durchaus akzeptabel. Ein Behälter 19a, 19b, 19c, 19d kann dann noch eine bestimmte Wassermenge enthärten bevor eine Regeneration gestartet wird. Dadurch wird die Salzausbeute optimiert.

In Figur 3a, 3b befinden sich die Behälter 19a, 19b, 19c im Normalbetrieb (Enthärtungsbetrieb), wohingegen der Behälter 19d regeneriert wird. Hierzu fließt Regeneriermittellösung (Salzsole) 29 aus einem Vorratsgefäß (Solebehälter) 30 über eine Soleleitung 31 d in den Harzbehälter 19d; verbrauchte Regeneriermittellösung fließt über eine Spülleitung 32d in den Kanal 33. Die Leitungen, in denen zur Regeneration des Behälters 19d Regeneriermittellösung fließen, sind in Figur 3a, 3b dunkel dargestellt.

Die Behälter 19a, 19b, 19c, 19d werden bevorzugt alle zu unterschiedlichen Zeiten regeneriert; nötigenfalls können Regenerationen einzelner Behälter vorgezogen werden, um eine gleichzeitige Regeneration mehrerer oder gar aller Behälter auszuschließen.

Um die Restkapazität der einzelnen Behälter mitzuverfolgen können vier Durchflussmesser (einer für jeden Behälter) vorgesehen sein. Alternativ ist es auch möglich, den Zufluss von Rohwasser zur Wasserenthärtungsanlage 16 insgesamt zu überwachen, etwa mit einem Durchflussmesser am Zufluss 17, und den Durchfluss durch die einzelnen Behälter 19a, 19b, 19c, 19d aus der Stellung des Verschneideventils 21 (die den Weichwasseranteil insgesamt anzeigt) und den Stellungen der Hauptventile 23a, 23b, 23c, 23d (offen oder geschlossen, was die Verteilung des bereiteten Weichwassers auf die gerade enthärtenden Behälter anzeigt) abzuschätzen.

Die Wasserenthärtungsanlage 16 kann mit einem Durchflussbegrenzer (nicht dargestellt) ausgestattet sein, etwa am Zulauf 17, um zumindest im zweiten Betriebsmodus den Wasserfluss durch die Behälter 19a-19d zu begrenzen und so einen Härteschlupf aufgrund von Überlastung zu verhindern. Weiterhin kann für den ersten Betriebsmodus ein Überströmventil (nicht dargestellt) vorgesehen sein, das bei hohem Wasserverbrauch öffnet, so dass zusätzliches Wasser direkt vom Zulauf 17 zum Ablauf 22 strömen kann.

### Bezugszeichenliste zu Figur 3a, 3b

- 16:: Wasserenthärtungsanlage
- 17:: Zulauf
- 18:: Verteilersystem
- 18a:: Vereinigersystem
- 19a, 19b, 19c, 19d:: Behälter mit Ionenaustauscherharz
- 20:: Verschneideeinrichtung
- 21:: Verschneideventil
- 21a:: Bypass
- 22:: Ablauf
- 23a, 23b, 23c, 23d:: Hauptventile
- 24a, 24b, 24c, 24d:: Regenerationsventile
- 25:: Tastatur
- 26:: elektronische Steuereinheit
- 27:: Eingabeschalter
- 28:: Eingabeschalter
- 29:: Regeneriermittellösung
- 30:: Vorratsgefäß (Solebehälter)
- 31a, 31b, 31c, 31d:: Soleleitungen
- 32a, 32b, 32c, 32d:: Spülleitungen
- 33:: Kanal

## Patentansprüche

1. Verfahren zum Betrieb einer Wasserenthärtungsanlage (16),
wobei die Wasserenthärtungsanlage (16) umfasst
- einen oder mehrere Behälter (19a-19d) mit lonentauscherharz;
- ein Vorratsgefäß (30) für eine Regeneriermittellösung (29) zum Regenerieren des Ionentauscherharzes;
- eine Verschneideeinrichtung (20), mit der aus einem enthärteten Teilstrom und einem rohwasserführenden Teilstrom ein Verschnittwasserstrom gemischt werden kann,
- und eine elektronische Steuereinheit (26),
wobei die Steuereinheit (26) eine Restkapazität eines jeden Behälters (19a-19d) mitverfolgt und abhängig von der Restkapazität eines jeweiligen Behälters (19a-19d) dessen Regeneration (12) auslöst,
**dadurch gekennzeichnet,**
**dass** in einem ersten Betriebsmodus (6) der Steuereinheit (26) die mitverfolgte Restkapazität eines jeweiligen Behälters (19a-19d) mit einem diesem Behälter (19a-19d) zugeordneten ersten Grenzwert GW1 verglichen wird, und eine Regeneration (12) des jeweiligen Behälters (19a-19d) nur dann ausgelöst werden kann, wenn die Restkapazität dieses Behälters (19a-19d) kleiner ist als der diesem Behälter (19a-19d) zugeordnete erste Grenzwert GW1 (13),
**dass** in einem zweiten Betriebsmodus (7) der Steuereinheit (26) die mitverfolgte Restkapazität eines jeweiligen Behälters (19a-19d) mit einem diesem Behälter (19a-19d) zugeordneten zweiten Grenzwert GW2 verglichen wird, und eine Regeneration (12) des jeweiligen Behälters (19a-19d) dadurch ausgelöst wird, dass die Restkapazität dieses Behälters (19a-19d) kleiner ist als der diesem Behälter (19a-19d) zugeordnete zweite Grenzwert GW2 (11),
wobei für einen jeweiligen Behälter (19a-19d) der zugeordnete erste Grenzwert GW1 kleiner ist als der zugeordnete zweite Grenzwert GW2, und dass die Wasserenthärtungsanlage (16) im ersten Betriebsmodus (6) Rohwasser gemischt mit enthärtetem Wasser bereitstellt, und im zweiten Betriebsmodus (7) nur vollständig enthärtetes Wasser bereitstellt.

2. Verfahren nach Anspruch 1, **dadurch gekennzeichnet, dass** der Betriebsmodus der Steuereinheit (26) durch die Stellung eines Verschneideventils (21) der Verschneideeinrichtung (20) bestimmt wird (5), wobei einer geöffneten oder teilgeöffneten Stellung des Verschneideventils (21), in der die Verschneideeinrichtung (20) Rohwasser gemischt mit enthärtetem Wasser bereitstellt, der erste Betriebsmodus (6) zugeordnet ist, und einer geschlossenen Stellung des Verschneideventils (21), in der die Verschneideeinrichtung (20) nur vollständig enthärtetes Wasser bereitstellt, der zweite Betriebsmodus (7) zugeordnet ist.

3. Verfahren nach Anspruch 1, **dadurch gekennzeichnet, dass** der Betriebsmodus der Steuereinheit (26) von der Steuereinheit (26) aus einem ausgewählten Härtegrad des von der Wasserenthärtungsanlage (16) bereitzustellenden Wassers automatisch ermittelt wird (5a), insbesondere wobei der ausgewählte Härtegrad an der Steuereinheit (26) direkt eingegeben wird.

4. Verfahren nach Anspruch 1, **dadurch gekennzeichnet, dass** der Betriebsmodus der Steuereinheit (26) an der Steuereinheit (26) direkt gewählt wird.

5. Verfahren nach einem der vorhergehenden Ansprüche, **dadurch gekennzeichnet, dass** im ersten Betriebsmodus (6) eine Regeneration (12) eines jeweiligen Behälters (19a-19d) dadurch ausgelöst wird, dass die Restkapazität dieses Behälters (19a-19d) den ersten Grenzwert GW1 unterschreitet und gleichzeitig eine Resthärte des vom lonentauscherharz dieses Behälters (19a-19d) enthärteten Wassers oder eine Resthärte eines von der Wasserenthärtungsanlage (16) insgesamt enthärteten Wassers einen Schwellwert SWW überschreitet.

6. Verfahren nach Anspruch 5, **dadurch gekennzeichnet, dass** der Schwellwert SWW nicht mehr als 15% der Härte des Rohwassers beträgt, insbesondere wobei der Schwellwert SWW 10% der Härte des Rohwassers beträgt.

7. Verfahren nach einem der vorhergehenden Ansprüche, **dadurch gekennzeichnet, dass** im ersten Betriebsmodus (6) eine Regeneration (12) eines jeweiligen Behälters (19a-19d) dadurch ausgelöst wird, dass die Restkapazität dieses Behälters (19a-19d) den ersten Grenzwert GW1 um mehr als einen Toleranzwert TOW unterschreitet.

8. Verfahren nach Anspruch 7, **dadurch gekennzeichnet, dass** der Toleranzwert TOW nicht mehr als 15% des ersten Grenzwerts GW1 beträgt, insbesondere wobei der Toleranzwert TOW 10% des ersten Grenzwerts GW1 beträgt.

9. Verfahren nach einem der Ansprüche 1 bis 4, **dadurch gekennzeichnet, dass** im ersten Betriebsmodus (6) eine Regeneration (12) eines jeweiligen Behälters (19a-19d) allein dadurch ausgelöst wird, dass die Restkapazität dieses Behälters (19a-19d) den ersten Grenzwert GW1 unterschreitet.

10. Verfahren nach einem der vorhergehenden Ansprüche, **dadurch gekennzeichnet, dass** die Menge der bei einer Regeneration (12) eines jeweiligen Behälters (19a-19d) verwendeten Regeneriermittellösung (29) der tatsächlich verbliebenen Restkapazität dieses Behälters (19a-19d) angepasst wird.

11. Verfahren nach einem der vorhergehenden Ansprüche, **dadurch gekennzeichnet, dass** die Grenzwerte GW1 und GW2 abhängig sind vom aktuellen oder erwarteten Volumenstrom des von der Wasserenthärtungsanlage (16) bereitgestellten Wassers, insbesondere wobei die Grenzwerte GW1 und GW2 bei geringerem aktuellen oder erwarteten Volumenstrom höher sind.

12. Verfahren nach einem der vorhergehenden Ansprüche, **dadurch gekennzeichnet, dass** die Restkapazität eines jeweiligen Behälters (19a-19d) aus der bereits mit diesem Behälter (19a-19d) enthärteten Wassermenge, der Rohwasserhärte und einer in der Steuereinheit (26) abgespeicherten Grundkapazität des lonentauscherharzes dieses Behälters (19a-19d) abgeleitet wird.

13. Wasserenthärtungsanlage (16), umfassend
- einen oder mehrere Behälter (19a-19d) mit lonentauscherharz;
- ein Vorratsgefäß (30) für eine Regeneriermittellösung (29) zum Regenerieren des lonentauscherharzes;
- eine Verschneideeinrichtung (20), mit der aus einem enthärteten Teilstrom und einem rohwasserführenden Teilstrom ein Verschnittwasserstrom gemischt werden kann,
- und eine elektronische Steuereinheit (26),
wobei die Steuereinheit (26) dazu ausgebildet ist, eine Restkapazität eines jeden Behälters (19a-19d) mitzuverfolgen und abhängig von der Restkapazität eines jeweiligen Behälters (19a-19d) dessen Regeneration (12) auszulösen,
**dadurch gekennzeichnet,**
**dass** die Steuereinheit (26) dazu ausgebildet ist,
**dass** in einem ersten Betriebsmodus (6) der Steuereinheit (26) die mitverfolgte Restkapazität eines jeweiligen Behälters (19a-19d) mit einem diesem Behälter (19a-19d) zugeordneten ersten Grenzwert GW1 verglichen wird, und eine Regeneration (12) des jeweiligen Behälters (19a-19d) nur dann ausgelöst werden kann, wenn die Restkapazität dieses Behälters (19a-19d) kleiner ist als der diesem Behälter (19a-19d) zugeordnete erste Grenzwert GW1 (13),
und **dass** in einem zweiten Betriebsmodus (7) der Steuereinheit (26) die mitverfolgte Restkapazität eines jeweiligen Behälters (19a-19d) mit einem diesem Behälter (19a-19d) zugeordneten zweiten Grenzwert GW2 verglichen wird, und eine Regeneration (12) des jeweiligen Behälters (19a-19d) dadurch ausgelöst wird, dass die Restkapazität dieses Behälters (19a-19d) kleiner ist als der diesem Behälter (19a-19d) zugeordnete zweite Grenzwert GW2 (11),
wobei für einen jeweiligen Behälter (19a-19d) der zugeordnete erste Grenzwert GW1 kleiner ist als der zugeordnete zweite Grenzwert GW2, und wobei die Wasserenthärtungsanlage (16) im ersten Betriebsmodus (6) Rohwasser gemischt mit enthärtetem Wasser bereitstellt, und im zweiten Betriebsmodus (7) nur vollständig enthärtetes Wasser bereitstellt.

14. Wasserenthärtungsanlage (16) nach Anspruch 13, **dadurch gekennzeichnet, dass** jeder Behälter (19a-19d) aufweist
- einen Durchflussmesser zur Bestimmung eines durch den Behälter (19a-19d) fließenden Wasserstroms,
- Ventile (23a-23d, 24a-24d) zur Steuerung a) des Zulaufs von Rohwasser, b) des Ablaufs von enthärtetem Wasser, c) des Zulaufs von Regeneriermittellösung (29) und d) des Ablaufs von verbrauchter Regeneriermittellösung und Spülwasser,
- sowie mindestens einen Stellmotor oder eine Hydraulik zur Betätigung der Ventile (23a-23d, 24a-24d).

## Claims

1. Method for operating a water softening system (16), the water softening system (16) comprising
- one or a plurality of containers (19a-19d) comprising an ion exchange resin;
- a supply container (30) for a regenerant solution (29) for regenerating the ion exchange resin;
- a blending device (20) for mixing a softened partial flow and a raw water partial flow into a blended water flow,
- and an electronic control unit (26),
wherein the control unit (26) monitors a residual capacity of each container (19a-19d) and, depending on the residual capacity of each respective container (19a-19d), triggers its regeneration (12), **characterized in that**
in a first operating mode (6) of the control unit (26), the monitored residual capacity of each respective container (19a-19d) is compared with a first limit value GW1 associated with this container (19a-19d) and regeneration (12) of the respective container (19a-19d) can be triggered only in case the residual capacity of this container (19a-19d) is smaller than the first limit value GW1 (13) associated with this container (19a-19d),
in a second operating mode (7) of the control unit (26), the monitored residual capacity of each respective container (19a-19d) is compared with a second limit value GW2 associated with this container (19a-19d) and regeneration (12) of the respective container (19a-19d) is triggered **in that** the residual capacity of this container (91a-19d) is smaller than the second limit value GW2 (11) associated with this container (19a-19d),
wherein the first limit value GW1 associated with each respective container (19a-19d) is smaller than the associated second limit value GW2, and that the water softening system (16) provides raw water mixed with softened water in the first operating mode, and provides only completely softened water in the second operating mode (7).

2. Method according to claim 1, **characterized in that** the operating mode of the control unit (26) is determined (5) by the position of a blending valve (21) of the blending device (20), wherein the first operating mode (6) is associated with an open or partially open position of the blending valve (21) in which the blending device (20) provides raw water mixed with softened water, and the second operating mode (7) is associated with a closed position of the blending valve (21) in which the blending device (20) provides only completely softened water.

3. Method according to claim 1, **characterized in that** the operating mode of the control unit (26) is automatically determined (5a) by the control unit (26) from a selected hardness degree of the water to be provided by the water softening system (16), in particular, wherein the selected hardness degree is directly input at the control unit (26).

4. Method according to claim 1, **characterized in that** the operating mode of the control unit (26) is selected directly at the control unit (26).

5. Method according to any one of the preceding claims, **characterized in that** in the first operating mode (6), regeneration (12) of a respective container (19a-19d) is triggered **in that** the residual capacity of this container (19a-19d) falls below the first limit value GW1 and at the same time a residual hardness of the water softened by the ion exchange resin of this container (19a-19d) or a residual hardness of the water softened by the water softening system (16) altogether exceeds a threshold value SWW.

6. Method according to claim 5, **characterized in that** the threshold value SWW is not more than 15% of the hardness of the raw water, in particular, wherein the threshold value SWW is 10% of the hardness of the raw water.

7. Method according to any one of the preceding claims, **characterized in that** in the first operating mode (6), regeneration (12) of a respective container (19a-19d) is triggered **in that** the residual capacity of this container (19a-19d) falls below the first limit value GW1 by more than a tolerance value TOW.

8. Method according to claim 7, **characterized in that** the tolerance value TOW is not more than 15% of the first limit value GW1, in particular, wherein the tolerance value TOW is 10% of the first limit value GW1.

9. Method according to any one of the claims 1 to 4, **characterized in that** in the first operating mode (6), regeneration (12) of a respective container (19a-19d) is triggered only **in that** the residual capacity of this container (19a-19d) falls below the first limit value GW1.

10. Method according to any one of the preceding claims, **characterized in that** the amount of the regenerant solution (29) used during regeneration (12) of a respective container (19a-19d) is adapted to the actually remaining residual capacity of this container (19a-19d).

11. Method according to any one of the preceding claims, **characterized in that** the limit values GW1 and GW2 depend on the instantaneous or expected volume flow of the water provided by the water softening system (16), in particular, wherein the limit values GW1 and GW2 are higher when the instantaneous or expected volume flow is lower.

12. Method according to any one of the preceding claims, **characterized in that** the residual capacity of a respective container (19a-19d) is derived from the amount of water that has already been softened with this container (19a-19d), the raw water hardness and a basic capacity of the ion exchange resin of this container (19a-19d) stored in the control unit (26).

13. Water softening system (16) comprising
- one or a plurality of containers (19a-19d) comprising an ion exchange resin;
- a supply container (30) for a regenerant solution (29) for regenerating the ion exchange resin;
- a blending device (20) for mixing a softened partial flow and a raw water partial flow into a blended water flow,
- and an electronic control unit (26),
wherein the control unit (26) is designed to monitor a residual capacity of each container (19a-19d) and, depending on the residual capacity of each respective container (19a-19d), to trigger its regeneration (12),
**characterized in that**
the control unit (26) is designed in such a manner that in a first operating mode (6) of the control unit (26), the monitored residual capacity of each respective container (19a-19d) is compared with a first limit value GW1 associated with this container (19a-19d) and regeneration (12) of the respective container (19a-19d) can be triggered only in case the residual capacity of this container (19a-19d) is smaller than the first limit value GW1 (13) associated with this container (19a-19d),
and that in a second operating mode (7) of the control unit (26), the monitored residual capacity of each respective container (19a-19d) is compared with a second limit value GW2 associated with this container (19a-19d) and regeneration (12) of the respective container (19a-19d) is triggered **in that** the residual capacity of this container (91a-19d) is smaller than the second limit value GW2 (11) associated with this container (19a-19d),
wherein the first limit value GW1 associated with each respective container (19a-19d) is smaller than the associated second limit value GW2, and wherein the water softening system (16) provides raw water mixed with softened water in the first operating mode, and provides only completely softened water in the second operating mode (7).

14. Water softening system (16) according to claim 13, **characterized in that** each container (19a-19d) comprises
- a flow meter for determining a water flow that flows through the container (19a-19d),
- valves (23a-23d, 24a-24d) for controlling a) the inflow of raw water, b) the outflow of softened water, c) the inflow of regenerant solution (29) and d) the outflow of consumed regenerant solution and rinsing water,
- as well as at least one servomotor or a hydraulic system for actuating the valves (23a-23d, 24a-24d).

## Revendications

1. Procédé d'exploitation d'une installation (16) d'adoucissement d'eau, sachant que l'installation (16) d'adoucissement d'eau comprend
- un ou plusieurs récipients (19a-19d) contenant de la résine échangeuse d'ions ;
- un réservoir (30) pour une solution (29) d'agent de régénération destinée à régénérer la résine échangeuse d'ions ;
- un dispositif de coupage (20), avec lequel on peut obtenir un flux d'eau coupée en mélangeant un flux partiel d'eau adoucie et un flux partiel d'eau brute ;
- et une unité de commande électronique (26),
sachant que l'unité de commande (26) contrôle en permanence une capacité résiduelle de chaque récipient (19a-19d) et, en fonction de la capacité résiduelle d'un récipient respectif (19a-19d), déclenche sa régénération (12),
**caractérisé**
**en ce que**, dans un premier mode de fonctionnement (6) de l'unité de commande (26), la capacité résiduelle contrôlée d'un récipient respectif (19a-19d) est comparée à une première valeur limite GW1 associée à ce récipient (19a-19d), et une régénération (12) du récipient respectif (19a-19d) ne peut être déclenchée que quand la capacité résiduelle de ce récipient (19a-19d) est inférieure à la première valeur limite GW1 (13) associée à ce récipient (19a-19d),
**en ce que**, dans un deuxième mode de fonctionnement (7) de l'unité de commande (26), la capacité résiduelle contrôlée d'un récipient respectif (19a-19d) est comparée à une deuxième valeur limite GW2 associée à ce récipient (19a-19d), et une régénération (12) du récipient respectif (19a-19d) est déclenchée par le fait que la capacité résiduelle de ce récipient (19a-19d) est inférieure à la deuxième valeur limite GW2 (11) associée à ce récipient (19a-19d),
sachant que, pour un récipient respectif (19a-19d), la première valeur limite associée GW1 est inférieure à la deuxième valeur limite associée GW2,
et **en ce que** l'installation (16) d'adoucissement d'eau fournit dans le premier mode de fonctionnement (6) de l'eau brute mélangée à de l'eau adoucie, et dans le deuxième mode de fonctionnement (7) uniquement de l'eau totalement adoucie.

2. Procédé selon la revendication 1, **caractérisé en ce que** le mode de fonctionnement de l'unité de commande (26) est déterminé (5) par la position d'une vanne de coupage (21) du dispositif de coupage (20), sachant qu'une position ouverte ou partiellement ouverte de la vanne de coupage (21), dans laquelle le dispositif de coupage (20) fournit de l'eau brute mélangée à de l'eau adoucie, est associée au premier mode de fonctionnement (6), et qu'une position fermée de la vanne de coupage (21), dans laquelle le dispositif de coupage (20) fournit uniquement de l'eau totalement adoucie, est associée au deuxième mode de fonctionnement (7).

3. Procédé selon la revendication 1, **caractérisé en ce que** le mode de fonctionnement de l'unité de commande (26) est automatiquement déterminé (5a) par l'unité de commande (26) à partir d'un degré de dureté sélectionné de l'eau à fournir par l'installation (16) d'adoucissement d'eau, sachant notamment que le degré de dureté sélectionné est directement saisi sur l'unité de commande (26).

4. Procédé selon la revendication 1, **caractérisé en ce que** le mode de fonctionnement de l'unité de commande (26) est directement sélectionné sur l'unité de commande (26).

5. Procédé selon l'une des revendications précédentes, **caractérisé en ce que**, dans le premier mode de fonctionnement (6), une régénération (12) d'un récipient respectif (19a-19d) est déclenchée par le fait que la capacité résiduelle de ce récipient (19a-19d) est inférieure à la première valeur limite GW1 et qu'en même temps, une dureté résiduelle de l'eau adoucie par la résine échangeuse d'ions de ce récipient (19a-19d) ou une dureté résiduelle d'une eau globalement adoucie par l'installation (16) d'adoucissement d'eau dépasse une valeur de seuil SWW.

6. Procédé selon la revendication 5, **caractérisé en ce que** la valeur de seuil SWW est inférieure ou égale à 15% de la dureté de l'eau brute, sachant notamment que la valeur de seuil SWW est égale à 10% de la dureté de l'eau brute.

7. Procédé selon l'une des revendications précédentes, **caractérisé en ce que**, dans le premier mode de fonctionnement (6), une régénération (12) d'un récipient respectif (19a-19d) est déclenchée par le fait que la capacité résiduelle de ce récipient (19a-19d) est inférieure à la première valeur limite GW1 de plus d'une valeur de tolérance TOW.

8. Procédé selon la revendication 7, **caractérisé en ce que** la valeur de tolérance TOW est inférieure ou égale à 15% de la première valeur limite GW1, sachant notamment que la valeur de tolérance TOW est égale à 10% de la première valeur limite GW1.

9. Procédé selon l'une des revendications 1 à 4, **caractérisé en ce que**, dans le premier mode de fonctionnement (6), une régénération (12) d'un récipient respectif (19a-19d) est déclenchée par le seul fait que la capacité résiduelle de ce récipient (19a-19d) est inférieure à la première valeur limite GW1.

10. Procédé selon l'une des revendications précédentes, **caractérisé en ce que** la quantité de la solution (29) d'agent de régénération utilisée lors d'une régénération (12) d'un récipient respectif (19a-19d) est adaptée à la capacité résiduelle effectivement restante de ce récipient (19a-19d).

11. Procédé selon l'une des revendications précédentes, **caractérisé en ce que** les valeurs limites GW1 et GW2 sont dépendantes du débit volumique actuel ou escompté de l'eau fourni par l'installation (16) d'adoucissement d'eau, sachant notamment que les valeurs limites GW1 et GW2 sont plus élevées lorsque le débit volumique actuel ou escompté est moins élevé.

12. Procédé selon l'une des revendications précédentes, **caractérisé en ce que** la capacité résiduelle d'un récipient respectif (19a-19d) est obtenue à partir de la quantité d'eau déjà adoucie avec ce récipient (19a-19d), de la dureté de l'eau brute et d'une capacité de base, mémorisée dans l'unité de commande (26), de la résine échangeuse d'ions de ce récipient (19a-19d).

13. Installation (16) d'adoucissement d'eau, comprenant
- un ou plusieurs récipients (19a-19d) contenant de la résine échangeuse d'ions ;
- un réservoir (30) pour une solution (29) d'agent de régénération destinée à régénérer la résine échangeuse d'ions ;
- un dispositif de coupage (20), avec lequel on peut obtenir un flux d'eau coupée en mélangeant un flux partiel d'eau coupée et un flux partiel d'eau brute ;
- et une unité de commande électronique (26),
sachant que l'unité de commande (26) est conçue pour contrôler en permanence une capacité résiduelle de chaque récipient (19a-19d) et, en fonction de la capacité résiduelle d'un récipient respectif (19a-19d), déclencher sa régénération (12),
**caractérisée en ce que** l'unité de commande (26) est conçue pour que, dans un premier mode de fonctionnement (6) de l'unité de commande (26), la capacité résiduelle contrôlée d'un récipient respectif (19a-19d) soit comparée à une première valeur limite GW1 associée à ce récipient (19a-19d), et une régénération (12) du récipient respectif (19a-19d) ne puisse être déclenchée que quand la capacité résiduelle de ce récipient (19a-19d) est inférieure à la première valeur limite GW1 (13) associée à ce récipient (19a-19d),
et que, dans un deuxième mode de fonctionnement (7) de l'unité de commande (26), la capacité résiduelle contrôlée d'un récipient respectif (19a-19d) soit comparée à une deuxième valeur limite GW2 associée à ce récipient (19a-19d), et une régénération (12) du récipient respectif (19a-19d) soit déclenchée par le fait que la capacité résiduelle de ce récipient (19a-19d) soit inférieure à la deuxième valeur limite GW2 (11) associée à ce récipient (19a-19d),
sachant que, pour un récipient respectif (19a-19d), la première valeur limite associée GW1 est inférieure à la deuxième valeur limite associée GW2,
et sachant que l'installation (16) d'adoucissement d'eau fournit dans le premier mode de fonctionnement (6) de l'eau brute mélangée à de l'eau adoucie, et dans le deuxième mode de fonctionnement (7) uniquement de l'eau totalement adoucie.

14. Installation (16) d'adoucissement d'eau selon la revendication 13, **caractérisée en ce que** chaque récipient (19a-19d) présente
- un débitmètre pour déterminer un flux d'eau s'écoulant à travers le récipient (19a-19d),
- des vannes (23a-23d, 24a-24d) pour commander a) l'entrée d'eau brute, b) la sortie d'eau adoucie, c) l'entrée de solution (29) d'agent de régénération et d) la sortie de solution d'agent de régénération usagée et d'eau de rinçage,
- ainsi qu'au moins un servomoteur ou un dispositif hydraulique pour l'actionnement des vannes (23a-23d, 24a-24d).
